# EUROPEAN PATENT APPLICATION

(11) **EP 2 511 691 A1**
(43) Date of publication of application: **17.10.2012**
(21) Application number: 11162424.3
(22) Date of filing: 14.04.2011
(51) Int. Cl.: G01N 21/03, G01N 21/27, G01N 35/00, B01L 3/00

(54) **System and method for calibration of an optical measuring apparatus**

(71) Applicant: Qiagen GmbH, 40724 Hilden (DE)
(72) Inventor: Voit, Dipl.-Ing. Thomas, 40721, Hilden (DE)
(74) Representative: Gille Hrabal

(57) **Abstract**

The present application relates to optical measuring apparatuses, systems that contain such apparatuses, and methods that use such apparatuses and/or systems.

In various known polymerase chain reaction (PCR) methods, better accuracy in the detection of an amplification signal is sought by calibrating the measuring apparatus with the utilized vessels or test tubes. Under current practice, calibration of such systems can influence the measuring signal and/or involve extensive amounts of time.

This problem is solved by a system and method comprising a source for an electromagnetic radiation, a vessel receiving the electromagnetic radiation and a detector for measuring a transmitted electromagnetic spectrum. The vessel material contains at least one additive which absorbs and/or emits at least one wavelength range of the incident electromagnetic radiation. The detector identifies the different absorption and/or emission characteristics in the transmitted electromagnetic spectrum.

## Description

The present application relates to an optical measuring apparatus, a system that contains such an apparatus, and a method that uses such an apparatus and/or system. More specifically the application relates to a measuring apparatus utilizing the polymerase chain reaction (PCR) method.

In various known polymerase chain reaction (PCR) methods, better accuracy in the detection of an amplification signal is sought by calibrating the measuring apparatus with the utilized vessels or test tubes. In particular, errors can result from material properties of the vessel, vessel types, contamination or other sources of background signal noise. Under current practice, calibration of such systems can influence the measuring signal and/or involve extensive amounts of time. A need exists for a calibration system and related techniques that address these and other issues.

An object of the invention, therefore, is to provide an improved system and apparatus for accurate and reliable optical measurements.

The object and advantages of this invention are achieved by the system, the vessel and the method according to the subject matter of the independent claims.

In accordance with claim 1 , the system includes a source for an electromagnetic radiation, a vessel receiving the electromagnetic radiation and a detector for measuring a transmitted electromagnetic spectrum. The vessel material contains at least one additive which absorbs and/or emits at least one wavelength range of the incident electromagnetic radiation. The detector measures the transmitted electromagnetic spectrum and identifies the different absorption and/or emission characteristics of the transmitted electromagnetic spectra.

The present invention enables the calibration of an optical measuring apparatus according to the identified vessel. The utilized vessels are identified and determined by the additive(s) contained in the vessel material via the transmitted electromagnetic spectrum. The additive contained in the vessel material absorbs and/or emits certain wavelength ranges of the incident electromagnetic radiation. The detector measuring the electromagnetic spectrum transmitted by the vessel identifies the absorption and/or emission characteristics caused by the additives in the vessel materials. Thus, the optical measuring apparatus for analyzing the sample in the vessel can be adjusted and calibrated according to the utilized vessel type, material and other properties, allowing for more accurate and reliable measurement results. Furthermore, misuse of vessels in the optical measuring apparatus can be prevented in a safe and reliable manner.

In general use, a user may install a vessel containing a sample in between a source and a detector for electromagnetic radiation. The source generates an electromagnetic radiation. The vessel receiving the electromagnetic radiation absorbs and/or emits certain wavelength ranges due to the additive inside the vessel material. Depending on the sample to be analyzed, the electromagnetic radiation can be directed through the liquid filled part of the vessel near the bottom or the empty part of the vessel near the top. The detector measures the transmitted electromagnetic spectrum and identifies the absorption and/or emission characteristics of the spectrum. The identified absorption and/or emission characteristics can represent vessel material, vessel type or other properties. In accordance with the identified vessel, the optical measuring apparatus can be adjusted and calibrated to enable an accurate analysis of the sample.

The absorption and/or emission characteristics may be represented by lines for the intensity of an absorption and/or emission. The intensity of an absorption and/or emission is preferably characterised dependent on the wavelength of the affected electromagnetic spectrum. The representation by lines for the intensity allows a simple identification of different absorption and/or emission characteristics. Additionally, alternatively, the absorption and/or emission characteristics may be represented by lines for the width of the absorption and/or emission. Due to the increase of possible absorption and/or emission characteristic, the identification of different absorption and/or emission characteristics can further be improved. The lines for the intensity and width of the absorption and/or emission may also be represented by shapes of the absorption and/or emission such as curves or graphs. The shape allows a more precise identification of different absorption and/or emission characteristics thus improving the overall precision and reliability of the calibration.

In an advantageous embodiment of this invention, a processor is provided to identify the absorption and/or emission characteristics. The processor is configured to identify the different absorption and/or emission characteristics in the transmitted electromagnetic spectra. The implementation by a processor allows for a fast, reliable and versatile identification of the different absorption and/or emission characteristics in the transmitted electromagnetic spectrum.

Preferably, the processor is coupled to a memory or storage device for storing electromagnetic spectra. The memory or storage device may store the electromagnetic spectra measured by the detector and/or reference spectra which have been either measured or preset. The storage capability allows the determination of vessel types by comparison of the measured electromagnetic spectrum with stored spectra. In addition, a reference spectrum of the source can be measured and stored for the calibration of the source. The radiation of the source can, for example, be affected by measurement conditions such as the absorption of peripheral equipment like lenses or holders. By carrying out a reference measurement of the source alone these influences can be minimized. This process yields more precise measurements of the transmitted electromagnetic spectra.

The preferred source radiates electromagnetic waves in the infrared region. The infrared range of the electromagnetic radiation is longer than that of visible light. When the source radiates electromagnetic waves in the infrared range, the visible range and/or the ultraviolet range may be utilized for the measurement of a sample inside the vessel. A PCR measurement, for example, may utilize the visible range of the spectrum to measure a fluorescent signal. In this way, it is possible to carry out a PCR measurement or calibration concurrently with the calibration regarding the vessel by using the infrared range of the electromagnetic spectrum. The calibration regarding the vessel may directly be incorporated in the analysis of the sample. In addition, the infrared range is further advantageous when analyzing liquid samples as these samples generally do not absorb any substantial amount of the infrared wavelength range.

Additionally, alternatively, the source may radiate electromagnetic waves in the ultraviolet range of the spectrum. The ultraviolet range of the electromagnetic spectrum is shorter than that of visible light. When the source radiates electromagnetic waves in the ultraviolet range, the visible range and/or the infrared range may be utilized for the measurement of a sample inside the vessel.

Generally, any wavelength range of the electromagnetic spectrum or a combination thereof may be used for the electromagnetic radiation of the source. The detector for measuring the transmitted electromagnetic spectrum is preferably adapted to the wavelength range of the source to reduce the noise of the measurement and increase the overall sensitivity. The source for the electromagnetic radiation is preferably implemented by a device provided outside of the vessel. The source may, for example, be realized by a xenon lamp which can illuminate the vessel from any side. The corresponding detector is preferably positioned on the opposite side of the source to allow an efficient transmission of the electromagnetic radiation through the vessel.

In another embodiment of the invention, the system comprises an optical element for converging and/or diverging and/or filtering the incident and/or the transmitted electromagnetic radiation. The optical element may be provided as a lens and/or a filter. The optical elements facilitate the transmission of the electromagnetic radiation in that the radiation can be optimized, creating an optimal optical path.

The vessel material apart from the additive or the vessel material not containing the additive is preferably made from a material with little absorption of their own. This is to prevent and reduce interfering absorptions from the material apart from the additive, especially in the wavelength range of interest.

In an advantageous embodiment of this invention, the wavelength range absorbed and/or emitted by the additive is narrow, preferably a wavelength range of 20 nm. The additive may affect only narrow ranges of the electromagnetic spectrum, thereby facilitating various absorption and/or emission characteristics. In this way, it is possible to identify numerous vessel types and materials to ensure a precise calibration of the optical measuring apparatus.

The additive in the vessel material preferably absorbs and/or emits several wavelength ranges of the electromagnetic spectrum. An additive, for example, may absorb a certain wavelength range and simultaneously emit an electromagnetic wave on another wavelength range. An optical brightener, for example, absorbs light in the ultraviolet and violet region of the electromagnetic spectrum, and emits light in the blue region. The combination of absorption and emission of wavelength ranges enables more unique absorption and/or emission characteristics thereby improving the identification of different vessel types. Independent of the incident electromagnetic radiation of the source, the absorption and/or emission of the vessel material may occur in another wavelength range of the electromagnetic spectrum. In this way, numerous absorption and/or emission characteristics can be generated and correspondingly identified by the transmitted electromagnetic spectra, thus improving the overall accuracy and reliability of the optical measuring apparatus.

According to another aspect of the invention, the at least one additive is adapted to absorb and/or emit the incident electromagnetic radiation in the infrared region of the electromagnetic spectrum. In fluorescence-based PCR analysis, for example, the fluorescent signal emitted from the vessel is measured in the visible region of the electromagnetic spectrum. By utilizing the infrared region for absorbing and/or emitting the incident electromagnetic radiation, the optical measurement for the analysis of the sample in the vessel is not affected or influenced. Further to that, the infrared region is usually not absorbed by the liquid sample inside the vessel which enables calibration measurements through the liquid filled part of the vessel.

Likewise, according to another aspect of the invention, the at least one additive is adapted to absorb and/or emit the incident electromagnetic radiation in the ultraviolet region of the electromagnetic spectrum. By utilizing the ultraviolet region for absorbing and/or emitting the incident electromagnetic radiation, an optical analysis utilizing the visible wavelength range is not affected or influenced.

In another embodiment of the invention the absorption and/or emission characteristics of the transmitted electromagnetic spectra represent codes for different vessel types, vessel materials and/or other properties. By combining several absorption and/or emission behaviours of different additives, it is possible to generate numerous absorption and/or emission characteristics which form a unique code to facilitate the calibration regarding the vessel. The detection of the code is preferably implemented by a processor to ensure fast and accurate processing.

Likewise, according to another aspect of the invention the source excites reference molecules in the sample contained in the vessel which in turn radiate a specific electromagnetic spectrum. Preferably, the electromagnetic spectrum radiated by the excited reference molecules is known. The electromagnetic spectrum radiated by the excited reference molecules may be measured in a separate step to enable an accurate calibration regarding the vessel. By excitation of reference molecules inside the vessel, the electromagnetic spectrum from the reference molecules is transmitted only through one wall of the vessel material before reaching the detector. Noise in the measured electromagnetic spectrum is thus reduced and the sensitivity of the measurement increased.

The reference molecules are preferably implemented by fluorescent materials such as dyes which may be used for PCR analysis. The fluorescent material may bind specific molecules and emit a fluorescent signal of a defined wavelength on binding. The additive in the vessel absorbs and/or emits specific wavelength ranges of the emitted fluorescent signal. The detector measures the transmitted electromagnetic spectrum and calibrates the optical measuring apparatus in accordance with the identified vessel.

This embodiment is particularly useful and advantageously employed when the sample in the vessel is analyzed by fluorescence-based PCR analysis. The identification of the utilized vessel and subsequent calibration can be carried out concurrently with a PCR calibration measurement. The calibration regarding the vessel and the calibration regarding the PCR analysis can be combined, thereby enabling a fast overall calibration of an optical measuring apparatus.

It is generally possible to align the source to illuminate an upper part of the vessel which is above the liquid level of the sample. The lower part of the vessel which contains the sample may be used for the optical measurement. This arrangement is particularly advantageous for samples which affect the transmission of an electromagnetic radiation, for example by interfering absorption. Furthermore, the calibration measurement regarding the vessel and the calibration regarding the optical measurement can be carried out concurrently without affecting each other.

Alternatively, the source for the electromagnetic radiation may be aligned to illuminate the liquid filled part of the vessel. The source may be utilized for the electromagnetic radiation as well as the optical measurement. This arrangement is particularly advantageous for samples which do not affect the transmission of an electromagnetic radiation. The necessary components can be reduced thereby leading to compact arrangements of the overall measuring apparatus.

In a preferred embodiment of the invention the source for the electromagnetic radiation is adapted for conducting an optical measurement of a sample inside the vessel. The source can radiate an electromagnetic radiation which can be utilized for an optical analysis. Many measuring methods in the biological field utilize the transmission of light for the analysis of a sample such as fluorescence-based PCR implementations. The source for the electromagnetic radiation may be aligned to illuminate the sample inside the vessel directly which enables the usage of the source for a calibration regarding the vessel as well as an optical analysis of a sample. The combined function of the source enables a compact calibration system.

Additionally, alternatively, the detector for measuring the transmitted electromagnetic spectrum may be adapted for optical measurement of a sample inside the vessel. The detector may be implemented by a spectrometer or photometer depending on the wavelength range of interest and the optical measuring implementation. The combined function of the detector reduces the necessary components enabling a compact overall measuring apparatus.

The preferred additive used for the vessel material is a laser additive. Laser additives are generally used for marking or welding polymers with a laser. Laser additives allow an efficient absorption of electromagnetic radiation in specific wavelength ranges, especially in a narrow band. Furthermore, laser additives can easily be compounded by mixing and/or blending them with polymers. Preferred laser additives are for example by BASF (Lumogen), by DSM or GABRIEL-CHEMIE.

In one embodiment of the invention, the vessel material comprises a special ultraviolet absorber as an additive. Additionally or alternatively the vessel material includes a special infrared absorber. The absorber as well as the additive may be custom-built to affect specific wavelength ranges of an incident electromagnetic radiation. By combining ultraviolet and infrared absorber more distinct absorption and/or emission characteristics for different vessels can be obtained. Thus-obtained differences in the transmitted electromagnetic spectra of the vessels further improve the calibration of a measuring apparatus.

An additive to absorb and emit specific wavelength ranges may comprise fluorescent molecules such as crystals and/or dyes. The preferred fluorescent molecules are intercalated as nanocrystals forming a composite material. The fluorescent molecules generally absorb a specific wavelength range and emit at a different specific wavelength range. The intensitiy and wavelength range may be controlled by the fluorescent molecules. Likewise, the additive may comprise optical brighteners to absorb and emit specific wavelength ranges. The optical brighteners generally absorb light in the ultraviolet and violet range and emit light in the blue region. By absorbing and emitting specific wavelength ranges, fluorescent molecules or optical brighteners allow the generation of distinct absorption and emission characteristics which facilitates the calibration regarding the vessel.

In accordance with an embodiment of this invention, a vessel for calibration of an optical measuring apparatus comprising an open top and a sealed bottom is provided. The vessel material contains at least one additive which absorbs and/or emits at least one wavelength range of an incident electromagnetic radiation.

This embodiment is particularly useful and advantageously employed when the preparation of a vessel and the measurement are carried out separately, for example, in different locations. The vessel may comprise an additional cap for sealing the vessel. The cap mounted on the housing ensures safe handling of the sample. By absorbing and/or emitting a wavelength range of an incident electromagnetic radiation, the identification of certain vessel types is rendered possible. The optical measuring apparatus can be adjusted and calibrated according to the identified vessel thus improving the accuracy and reliability of the optical measurement.

The preferred vessel has the following dimensions and geometry; a round cross section, a height of up to 20 mm, a diameter of up to 20 mm and a wall thickness of less than 0,6 mm. The preferred vessel is manufactured from plastics such as polypropylene (PP), cyclic olefin copolymer (COC) or polyethylene (PE). The vessels may be injection moulded, multi-component injection moulded or thermoformed to allow an easy to fabricate vessel. Preferably, the vessel is made to be optically transparent to allow most of the light to be transmitted and facilitate an optical measurement.

In accordance with an embodiment of this invention, the vessel comprises an additive in the form of a pattern. The pattern may be formed as a linear barcode or matrix (two-dimensional) barcode for representing information. The encoded information can comprise vessel type, material, properties as well as information related to the measuring procedure and instructions for use. The pattern may be invisible and the detector measuring the transmitted electromagnetic spectrum may be adapted to decode the contained information. Generally, any type of information may be represented by the pattern such as vessel type, material, properties and information related to the handling and the measuring procedure. The encoding by means of a pattern facilitates an additional or alternative way to identify vessels. In addition, extended information can be represented by the patterns. This allows a versatile employment of the additives in the vessel material for an improved calibration of the optical measuring apparatus.

The patterns may be generated by the targeted placement of additives in the vessel material. The placement may be performed during manufacturing for example by the specific injection of additives as shapes that form a pattern. The targeted placement enables a simple way to generate patterns in the vessel material during manufacture.

Additionally, alternatively, the patterns may be generated by the targeted destruction of additives in the vessel material. The additive may be disabled locally by heat, for example by a laser. The laser may disable the additive in a controlled manner to generate a desired pattern in the vessel material. The targeted local destruction of additives allows a versatile generation of patterns, especially after manufacturing the vessel. Thereby, the encoding of the vessels can be carried out separately allowing a flexible employment of the pattern generation method. In addition, the usage of highly precise destruction means like lasers enables the generation of complex patterns improving the information density on the vessel material.

Other characteristics, advantages and potential applications of this invention are obvious from the description of further details and embodiments of this invention.

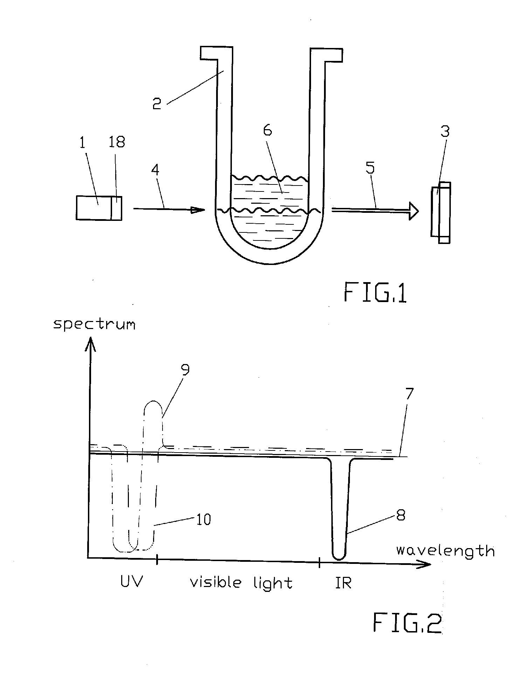

FIG. 1 is a schematic view of a calibration system in accordance with one embodiment of the invention. The system comprises a source for an electromagnetic radiation, a vessel 2 and a detector for measuring the transmitted electromagnetic spectrum. The source is implemented by a xenon lamp 1 with a filter 18. The vessel 2 may contain a sample 6 inside. The electromagnetic radiation of the xenon lamp 1 is transmitted by the vessel 2 and measured by the spectrometer 3 on the other side. The vessel 2 contains at least one additive which absorbs and/or emits at least one wavelength range of the incident electromagnetic radiation 4. The spectrometer 3 on the other side of the vessel 2 detects the transmitted electromagnetic spectrum 5.
FIG. 2 is a schematic view of different electromagnetic spectra in accordance with the invention. The constant spectrum of the source is depicted as the spectrum for incident electromagnetic radiation 7. The spectrum of an incident electromagnetic radiation may also be emitted by excited reference molecules in the vessel which preferably radiate a constant spectrum. The transmitted spectrum of a vessel containing a IR-absorber 8 as an additive features a characteristic decline in the infrared wavelength range. The transmitted spectrum of vessel containing a UV absorber 10 features a decline in the ultraviolet wavelength range. The transmitted spectrum of a vessel containing an optical brightener 9 features a decline with a subsequent rise. The position, intensity, width as well as the shape of the absorption and/or emission curves can be modified by the additive type or a combination of several additives.This allows the generation of various absorption and/or emission characteristics.

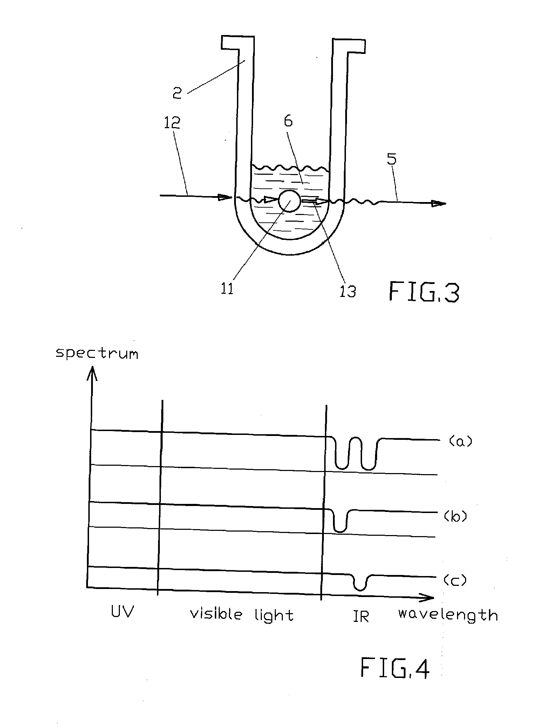

FIG. 3 is a schematic view of reference molecules emitting an electromagnetic spectrum on excitation 12. The reference molecules in the sample 6 may be implemented by a fluorescent dye 1 1 which can be used for fluorescence-based PCR analysis. The excitation 12 may be carried out by the source for an electromagnetic radiation. The electromagnetic spectrum emitted by the fluorescent dye 1 1 is modified by the vessel 2 depending on the additive in the vessel material. The transmitted electromagnetic spectrum 5 is measured in the detector and the absorption and/or emission characteristics is identified. Furthermore, the electromagnetic spectrum emitted by the fluorescent dye 1 1 may concurrently be used for calibrating a PCR measuring apparatus.
FIG. 4 is a schematic display of electromagnetic spectra containing different absorber additives in accordance with one embodiment of the invention. The spectrum of FIG. 4(a) features two characteristic declines which may be accomplished by two active absorbers in the vessel material. The spectrum of FIG. 4(b) depicts one characteristic decline where only a first absorber is active. The spectrum of FIG. 4(c) shows a characteristic decline when only a second absorber is active. Each of the absorption characteristics can be used as a code for certain vessel materials, vessel types and/or other properties, allowing for the simple identification of these.

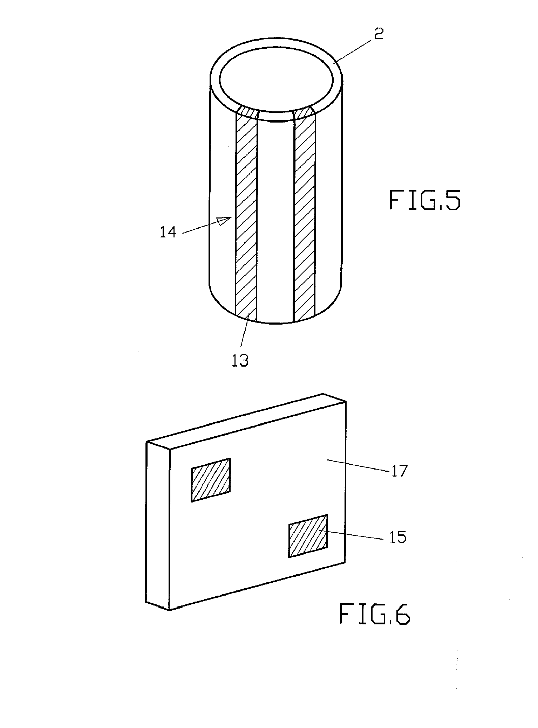

FIG. 5 is a schematic view illustrating the targeted placement of additives in a vessel in accordance with one embodiment of the invention. The vessel comprises extruded additive strips 13 that form a linear pattern 14. The additive strips 13 may contain the same additive or alternatively different additives in order to represent various properties of the vessel.
FIG. 6 is a schematic cut-out of a vessel illustrating the targeted destruction of additives in the vessel material to generate a pattern in accordance with one embodiment of the invention. The pattern area 1 7 consists of deactivated areas of the additive and unaffected areas of the additive that form a matrix pattern. The additive may be locally deactivated by a laser that can generate such patterns in an efficient and precise manner.

## Claims

1. A system for calibration of an optical measuring apparatus, comprising a source (1) for an electromagnetic radiation,
a vessel (2) receiving the electromagnetic radiation, wherein the vessel material contains at least one additive which absorbs and/or emits at least one wavelength range of the incident electromagnetic radiation, and a detector (3) for measuring a transmitted electromagnetic spectrum, wherein the detector is adapted for identifying absorption and/or emission characteristics in the transmitted electromagnetic spectrum.

2. A calibration system according to the preceding claim, comprising a processor configured to identify absorption and/or emission characteristics.

3. A calibration system according to any of the preceding claims, comprising a memory and/or storage device, preferably coupled to the processor, adapted for storing electromagnetic spectra.

4. A calibration system according to any of the preceding claims, wherein the vessel comprises at least one additive in form of a pattern and/or a shape.

5. A calibration system according to any of the preceding claims, wherein the at least one additive is adapted for absorption and/or emission in the infrared range of the electromagnetic spectrum.

6. A calibration system according to any of the preceding claims, wherein the at least one additive is adapted for absorption and/or emission in the ultraviolet range of the electromagnetic spectrum.

7. A calibration system according to any of the preceding claims, wherein the source (1) and/or the detector (3) is/are adapted for optical measuring, preferably by utilizing a PCR analysis.

8. A vessel (2) for calibration of an optical measuring apparatus, comprising an open top and a sealed bottom, and the vessel material contains at least one additive for absorbing and/or emitting at least one wavelength range of an incident electromagnetic radiation.

9. A vessel according to the preceding claim, wherein the vessel comprises at least one additive in form of a pattern and/or shape.

10. A vessel (2) according to any of claims 8-9, wherein the length does not exceed 20 mm and/or the diameter does not exceed 20 mm and/or the wall thickness does not exceed 0,6 mm.

11. A vessel (2) according to any of claims 8-1 0, wherein the at least one additive is adapted for absorption and/or emission in the infrared range of the electromagnetic spectrum.

12. A vessel (2) according to any of claims 8-1 1 , wherein the at least one additive is adapted for absorption and/or emission in the ultraviolet range of the electromagnetic spectrum.

13. A method for calibration of an optical measuring apparatus, comprising the steps of:
illuminating a vessel (2) with an electromagnetic radiation,
the vessel (2) absorbing and/or emitting at least one wavelength range of the electromagnetic radiation,
a detector (3) measuring a transmitted electromagnetic spectrum, and
identifying the absorption and/or emission characteristics of the transmitted electromagnetic spectrum.

14. A method according to the preceding claim, wherein the vessel contains reference molecules, particularly in form of a fluorescent dye, and said reference molecules emit an electromagnetic spectrum, particularly when excited by a source.

15. A method according to any of the two preceding claims, wherein at least one of the steps is carried out concurrently with an optical measurement, particularly by utilizing a PCR analysis.
